# EUROPÄISCHE PATENTSCHRIFT

(11) **EP 2 764 568 B1**
(45) Veröffentlichungstag und Bekanntmachung des Hinweises auf die Patenterteilung: **27.07.2016**
(21) Anmeldenummer: 12778071.6
(22) Anmeldetag: 09.10.2012
(51) Int. Cl.: H01M 8/0656, H01M 8/04082, B63G 8/08, C01B 3/00

(54) **ENERGIEQUELLE ZUM BETRIEB VON WASSERFAHRZEUGEN**
ENERGY SOURCE FOR OPERATING WATERCRAFT
SOURCE D'ÉNERGIE PERMETTANT DE FAIRE FONCTIONNER DES VÉHICULES AQUATIQUES

(30) Priorität: 09.10.2011 DE 102011115950
(43) Veröffentlichungstag der Anmeldung: 13.08.2014
(73) Patentinhaber: Hydrogenious Technologies GmbH, 91058 Erlangen (DE)
(72) Erfinder: Arlt, Wolfgang, Erlangen (DE)
(74) Vertreter: Patentship Patentanwaltsgesellschaft mbH
(86) Internationale Anmeldenummer: PCT/EP2012/069924
(87) Internationale Veröffentlichungsnummer: WO 2013/053680

(56) Entgegenhaltungen:
- EP-A2- 1 475 349
- WO-A1-2013/026910
- WO-A1-2013/083828
- GB-A- 2 405 742
- US-A1- 2006 009 092
- US-A1- 2008 138 675

## Beschreibung

Diese Erfindung betrifft eine Anordnung und ein Verfahren zum Betrieb von Unterwasserschiffen auf Basis von flüssigen organischen Wasserstoffträgern (LOHC).

In der Druckschrift DE 10 2011 111 565.3 ist eine Technologie für die Energieversorgung unter Verwendung von Brennstoffzellen beschrieben.

In der Druckschrift EP 1 475 349 A1 werden verschiedene aromatische Verbindungen, insbesondere kondensierte polycyclische Kohlenwasserstoffe beschrieben, die zur Verwendung als Wasserstoffspeicher einsetzbar sind. Die beschriebenen Substanzen werden in mobilen Landfahrzeugen oder stationär an Land eingesetzt.

Die Druckschrift US 2008/0138675 A1 betrifft ein Erzeugungs- und Speicherverfahren zum Erzeugen und Speichern von Wasserstoff in einem Gebäude, das es erlaubt, dass der erzeugte Wasserstoff in ein Fahrzeug umgefüllt wird.

Die Druckschrift GB 2 405 742 A betrifft eine Erzeugungseinheit von Wasserstoff für ein Boot mittels elektrolytischer Umsetzung aus Wasser, die unterschiedliche Energiequellen verwendet.

Die Druckschrift US 2006/0009092 A1 betrifft ein elektrisches Wasserfahrzeug, das seine eigene Elektrizität mittels eines Brennstoffzellensystems erzeugt. Zum Vortrieb des Bootes ist ein Elektromotor vorgesehen, der mittels der elektrischen Energie aus der Brennstoffzelle angetrieben wird.

Die Druckschrift WO 2013/026910 A1 betrifft eine Anordnung und ein Verfahren zur Energieversorgung von Gebäuden. Die Anordnung umfasst eine energieerzeugende Anlage, einen Elektrolyseur, einen ersten und zweiten chemischen Reaktor, einen Speichertank, und eine Brennstoffzelle.

Die Druckschrift WO 2013/083828 A1 betrifft eine Anordnung und ein Verfahren zur Energiespeicherung in Gebäuden und Energieversorgung von Gebäuden. Die Anordnung umfasst einen elektrischen Stromanschluss, einen Elektrolyseur, einen ersten und zweiten chemischen Reaktor, einen Speichertank, und eine Brennstoffzelle.

Brennstoffzellen können zur Gewinnung von elektrischem Strom durch Oxidation von Sauerstoff verwendet werden. Ein wesentlicher und kritischer Aspekt bei der Verwendung von Brennstoffzellen ist die Lagerung bzw. Speicherung von Wasserstoff, der in Gegenwart von Sauerstoff extrem explosiv ist.

Bisher sind eine Reihe von Wasserstoffspeicherverfahren untersucht worden: adsorptiv, absorptiv, als Flüssigkeit, als hochverdichtetes Gas. Der Nachteil aller Verfahren ist deren niedrige Energiedichte pro Volumen und die zum Teil hohen Kosten des Trägers. Die bisher gängigen Verfahren der Lagerung von Wasserstoff als Flüssigkeit bei sehr niedrigen Temperaturen und unter hohem Druck repräsentieren technische Lösungen, die so nur schwer in Wasserfahrzeuge oder Unterwasserfahrzeuge eingebaut werden können.

So sind Behälter mit komprimiertem Wasserstoff schwer zu dichten und Wasserstoff explodiert oder detoniert mit Druckwellen von über 1000 m/s in fast jeder Mischung von 4 bis 75% mit Luft. Zudem ist die Mindestzündenergie niedriger als bei anderen gasförmigen Stoffen. Wasserstoff ist als hochentzündlich (F+) eingestuft und kann sich bei hohen Austrittsgeschwindigkeiten, wie auch im Fall von anderen Gasen, von selbst entzünden.

Der Formelumsatz bei der Explosion mit Luft beträgt 286 kJ/mol. Bei einem Kriegsschiff als Unterwasserfahrzeug würde der kleinste Treffer den Tankinhalt zur Explosion bringen. Flüssiger Wasserstoff braucht Temperaturen bis zum Tripelpunkt des Wasserstoffs. Diese niedrigen Temperaturen bewirken trotz bester Isolation eine Wärmezufuhr und damit die Bildung von gasförmigem Wasserstoff, der abgelassen oder verbrannt werden muss, wenn der Wasserstoff nicht gebraucht wird.

Wird der Energievorrat eines mit Diesel betriebenen U-Bootes getroffen, schwimmt Diesel aufgrund seiner Dichte und geringen Wasserlöslichkeit sofort an die Oberfläche. Wird der Energievorrat eines mit flüssigem Wasserstoff betriebenen U-Boot getroffen, steigt der Wasserstoff aufgrund seiner extrem geringen Dichte und Löslichkeit ebenfalls sofort an die Oberfläche.

Das gleiche gilt für ein U-Boot mit Druckwasserstoff-Energiespeicher. Wird der Energievorrat eines mit Wasserstoff aus Metallhydriden betriebenen U-Bootes getroffen, kommt es zu einer heftigen chemischen Reaktion unter Bildung von Wasserstoff. Alle Szenarien verraten sofort die Position des getroffenen U-Bootes. Wird ein U-Boot mit beispielsweise 12H-NEC als Energiespeicher getroffen, schwimmt die Substanz aufgrund der wasserähnlichen Dichte nur sehr langsam auf und gibt dem U-Boot Zeit zum Entkommen.

Heute wird in den U-Booten der Marine der Wasserstoff mittels Metallhydriden gespeichert. Beispiele hierfür sind Aluminium, Magnesium, Palladium, LaNi5 und TiNi-Ti2Ni. Metalle, auch wenn sie als Schäume ausgebildet sind, erhöhen das Gewicht des Speichers beträchtlich. Die sogenannten Niedertemperatur-Metall-Hydride weisen nur relativ geringe Plateau-Breiten (Beladung bei konstantem Druck) und niedrige Speicherdichten von etwa 1.5 MJ/kg (1,2 Ma%) auf.

Mit Hochtemperatur-Metallhydriden können höhere Speicherdichten von etwa 3,3 bis 3,4 Ma% bezogen auf das Systemgewicht (4 MJ/kg) erzielt werden, diese lassen sich jedoch in einem regelmäßig beengten Unterwasserfahrzeug schwer gegen die Umgebung isolieren.

Bei einer Be- oder Entladung steht ein Metall mit dem Wasserstoffgas im Gleichgewicht, so dass anfänglich Wasserstoff im Metall auf Zwischengitterplätzen gelöst wird (Festkörperlösung). In dieser Lösungsphase (alpha-Phase) steigt bei kleiner Konzentration der Wasserstoffdruck an.

Erreicht die Konzentration einen bestimmten Wert von ungefähr 0,1 Wasserstoffatomen pro Metallatom, beginnt sich eine Hydridphase (beta-Phase) aus der Lösungsphase zu bilden. Im Bereich der Koexistenz der Lösungsphase und der Hydridphase wächst die Konzentration bei konstantem äußerem Druck (Plateau). Nachdem die Hydridphase vollständig ausgebildet ist, kann weiter Wasserstoff in der Hydridphase gelöst werden. Der Gleichgewichtsdruck steigt jetzt wieder mit der Konzentration an. Der Plateaudruck und die Plateaulänge in den Druck-Konzentrations-Isothermen sind Temperaturabhängig und erlauben somit das Be- und Entladen.

Die Wasserstoff-Absorption und -Desorption verlaufen nicht beliebig schnell. Die Reaktion beinhaltet mehrere aufeinanderfolgende Schritte: Diffusion im Gas, Chemisorption und Dissoziation des Moleküls, Diffusion im Metallgitter, Nukleation und Wachstum der Hydridphase.

Der langsamste Schritt bestimmt die Kinetik der Wasserstoff-Absorption und -Desorption. Das Wasserstoffatom ist zwar klein und wird durch die chemische Bindung an das Metall noch kleiner, dennoch verspannt und verzerrt der Einbau des Wasserstoffatoms das Metallgitter. Das Kristallgitter des Metallhydrids ist im Vergleich zum Gitter des reinen Metalls um 10 bis 20 Vol.-% gedehnt. Die Dehnung erfolgt oft anisotrop, das heißt, das Metall dehnt sich in die verschiedenen Kristallrichtungen unterschiedlich stark aus. Dies führt zum Bruch der Partikel. Bisherige Metallhydridspeicher besitzen daher häufig Feinfilter zur Zurückhaltung feiner Partikel, die bei der Entladung des Speichers ausgetragen würden. Das macht Metallhydridspeicher teuer und nicht beliebig oft beladbar.

Es ist daher die Aufgabe der vorliegenden Erfindung, die Nachteile der heute in Wasserfahrzeugen genutzten Metallhydrid-Speicher zu vermieden. Es ist eine weitere Aufgabe der vorliegenden Erfindung, eine Anordnung zum Betrieb von Wasserfahrzeugen anzugeben, die weitgehend drucklos arbeitet; von außen betankt werden kann, beispielsweise in einem Hafen; keine hohe Wärmeentwicklung wie Metallhydride aufweist, so dass der Wirkungsgrad der Ladung/Entladung hoch ist; bei Kriegsschiffen Treffer in den Tank toleriert und deren Position nicht verrät; eine hohe Speicherdichte bei niedrigem Druck aufweist; sehr häufig ohne Feinststaubbildung be- und entladbar ist und bei der Wasserstoff in einer nicht-explosiven Form im Speicher vorliegt.

Diese Aufgabe wird durch Gegenstände mit den Merkmalen nach den unabhängigen Ansprüchen gelöst. Vorteilhafte Ausführungsformen sind Gegenstand der Beschreibung, der Figuren und der abhängigen Ansprüche.

Die vorliegende Erfindung basiert auf der Erkenntnis, dass es wünschenswert ist, eine Technologie für die Energieversorgung unter Verwendung von Brennstoffzellen bereitzustellen, die die Risiken des reinen Wasserstoffs bei niedrigen Temperaturen oder unter Druck bzw. die Verwendung von Metallhydriden vermeidet.

Unter dem Begriff Unterwasserschiff wird ein Schiff verstanden, das bemannt oder unbemannt ist und zu dessen regelmäßigen Betrieb es gehört, teilweise oder vollständig getaucht unter Wasser zu fahren.

Gemäß einem ersten Aspekt wird die Aufgabe durch eine Anordnung zum Aufladen eines Vorrats an energiereichem Substrat für Unterwasserschiffe bei Oberwasserfahrt gelöst, mit einer Energiequelle, die entweder ein mit fossilen Treibstoffen angetriebener Antrieb oder ein Antrieb aus Kernenergie ist, und einem damit betriebenen Generator für Gleichstrom; einem Vorratstank für destilliertes oder entionisiertes Wasser; einem Vorratstank (b) für Sauerstoff oder Luft; einem Elektrolyseur zum Umsetzen des Wassers aus dem Vorratstank mit dem Gleichstrom aus der Energiequelle in Wasserstoff und Sauerstoff; einem Vorratstank für Sauerstoff; einem chemischen Reaktor zur Erzeugung einer energiereichen Form des Substrats mit einem ausgedehnten π-konjugierten System durch chemische Reaktion mittels Wasserstoff; und einem Speicher für die im Reaktor erzeugte energiereiche Form des Substrats.

Flüssige Wasserstoffträger werden an Land oder während der Fahrt mit Wasserstoff beladen, der dann bei einer Wasserfahrt oder Unterwasserfahrt wieder freigesetzt wird und damit den Antrieb mittels einer Brennstoffzelle oder eines Explosionsmotors erlaubt. Auch eine Betankung an Land oder von einem Tankschiff aus ist denkbar.

Grundlage der Wirkungsweise von kondensierten polycyclischen Kohlenwasserstoffen, die über ein ausgedehntes π-konjugiertes Elektronensystem verfügen, ist deren Eigenschaft, bei moderaten Temperaturen in Gegenwart eines geeigneten Katalysators einer Hydrierungsreaktion zu unterliegen. Dabei wird Wasserstoff unter Sättigung der ungesättigten Doppelbindungen in die Substanz eingebaut (hydriert).

Der mittels Hydrierung eingebaute Wasserstoff kann im Folgenden in der Rückreaktion lediglich durch Temperaturerhöhung und/oder Reduzierung des Wasserstoffdruckes wieder aus dem hydrierten Produkt unter Regenerierung der aromatischen Substanz gewonnen werden.

In einer vorteilhaften Ausführungsform ist die Anordnung ausgebildet, die Energiequelle und entionisiertes oder destilliertes Wasser aus dem Tank einem Elektrolyseur zuzuleiten, dessen erzeugter Wasserstoff in einem chemischen Reaktor zur vollständigen oder teilweisen Hydrierung der energiearmen Form des Substrats mit dem ausgedehnten π-konjugierten System (LOHC) benutzt wird.

Gemäß einem zweiten Aspekt wird die Aufgabe durch eine Anordnung zum elektrischen Antrieb von Schiffen oder Unterwasserschiffen bei Unterwasserfahrt gelöst, mit einer Energiequelle in Form der energiereichen Form eines Substrats mit einem ausgedehnten π-konjugierten System; einem Vorratstank für Sauerstoff oder Luft; einem chemischen Reaktor zur Erzeugung von Wasserstoff aus dem Substrat mit dem ausgedehnten π-konjugierten System; einer Brennstoffzelle zum Erzeugen von Gleichstrom und Wasser; und einem elektrischen Antrieb zum Umsetzen des Gleichstromes in Vorwärtsbewegung.

In einer vorteilhaften Ausführungsform ist die Anordnung ausgebildet, den Vorratstank an energiereicher Form mit mindestens einem chemischen Reaktor und mindestens einer Brennstoffzelle zu nutzen, um den elektrischen Antrieb zu betreiben.

In einer weiteren vorteilhaften Ausführungsform ist das Substrat mit dem ausgedehnten π-konjugierten System ausgewählt aus einer Gruppe enthaltend polycyclische aromatische Kohlenwasserstoffe, polycyclische heteroaromatische Kohlenwasserstoffe, π-konjugierte organische Polymere oder einer Kombination davon.

In einer weiteren vorteilhaften Ausführungsform ist das Substrat mit dem ausgedehnten π-konjugierten System ausgewählt aus einer Gruppe enthaltend kondensierte heteroaromatische Kohlenwasserstoffe mit N, S oder O als Heteroatom, wobei die Heteroatome substituiert oder unsubstituiert vorliegen.

In einer weiteren vorteilhaften Ausführungsform sind die kondensierten heteroaromatischen Kohlenwasserstoffe Ringsysteme mit C6 bis C30, bevorzugt C8 bis C20, insbesondere C12.

In einer weiteren vorteilhaften Ausführungsform sind die Heteroatome mit mindestens einer Alkylgruppe, mindestens einer Arylgruppe, mindestens einer Alkenylgruppe, mindestens einer Alkinylgruppe, mindestens einer Cycloalkylgruppe und/oder mindestens einer Cycloalkylengruppe substituiert.

In einer weiteren vorteilhaften Ausführungsform sind die Heteroatome mit C1-C30-Alkyl, bevorzugt C1-C10-Alkyl, insbesondere mit C2-C5-Alkyl substituiert.

In einer weiteren vorteilhaften Ausführungsform enthält die Anordnung einen Zusatzstoff, der die Dichte des Substrates über 1 g/ml hebt.

In einer weiteren vorteilhaften Ausführungsform ist das Substrat mit dem ausgedehnten π-konjugierten System N-Ethylcarbazol, N-n-Propylcarbazol, N-iso-Propylcarbazol.

In einer weiteren vorteilhaften Ausführungsform ist die Anordnung ausgebildet, das Substrat mit dem ausgedehnten π-konjugierten System in dem chemischen Reaktor (h) bei einer Temperatur zwischen 50 und 180°C und einem Druck zwischen 2 und 200 bar in Gegenwart eines geeigneten Katalysators zumindest teilweise zu hydrieren.

In einer weiteren vorteilhaften Ausführungsform ist die Anordnung ausgebildet, das hydrierte Substrat in dem chemischen Reaktor (c) bei einer Temperatur zwischen 120 und 250°C und bei Normaldruck in Gegenwart eines geeigneten Katalysators zumindest teilweise zu dehydrieren.

Gemäß einem dritten Aspekt wird die Aufgabe durch ein Verfahren zum Erzeugen und Speichern einer energiereichen Form eines Substrats mit einem ausgedehntem π-konjugierte System für den Einsatz in über Wasser fahrenden Unterwasserschiffen, insbesondere von U-Booten, gelöst, mit den Schritten eines Erzeugens von Gleichstrom mit einer Energiequelle, die entweder ein mit fossilen Treibstoffen angetriebener Antrieb eines Unterwasserschiffs oder ein Antrieb eines Unterwasserschiffs aus Kernenergie ist, und einem damit betriebenen Generator für Gleichstrom; eines Speicherns von destilliertem oder entionisiertem Wasser in einem Vorratstank; eines Umsetzens des Wassers aus dem Vorratstank mit dem Gleichstrom aus der Energiequelle in Wasserstoff und Sauerstoff in einem Elektrolyseur; eines Speichern von Sauerstoff in einem Vorratstank; eines Erzeugens einer energiereichen Form des Substrats mit einem ausgedehnten π-konjugierten System durch chemische Reaktion mittels Wasserstoff in einem chemischen Reaktor; und eines Speichern der im Reaktor erzeugten energiereichen Form des Substrats in einem Speicher.

Gemäß einem vierten Aspekt wird die Aufgabe durch ein Verfahren zur Energieversorgung von getaucht fahrenden Unterwasserschiffen, insbesondere von U-Booten, mit einer Energiequelle in Form der energiereichen Form eines Substrats mit einem ausgedehnten π-konjugierten System gelöst, mit den Schritten eines Speicherns von Sauerstoff oder Luft in einem Vorratstank; eines Erzeugens von Wasserstoff aus dem Substrat mit dem ausgedehnten π-konjugierten System in einem chemischen Reaktor; eines Erzeugens von Gleichstrom und Wasser in einer Brennstoffzelle; und eines Umsetzen des Gleichstromes in Vorwärtsbewegung in einem elektrischen Antrieb.

In einer vorteilhaften Ausführungsform sieht das Verfahren die Betankung des Unterwasserfahrzeugs von Land oder von einem Tankschiff aus mit energiereicher Form des Substrats mit dem ausgedehnten π-konjugierten System vor.

Die Erfindung wird nachfolgend unter Bezugnahme auf die Abbildungen an mehreren Ausführungsbeispielen näher erläutert. Es zeigen:
Fig. 1 eine schematische Darstellung einer Ausführungsform einer Anordnung bei einer Unterwasserfahrt; und
Fig. 2 eine schematische Darstellung einer Ausführungsform einer Anordnung bei einer Überwasserfahrt.

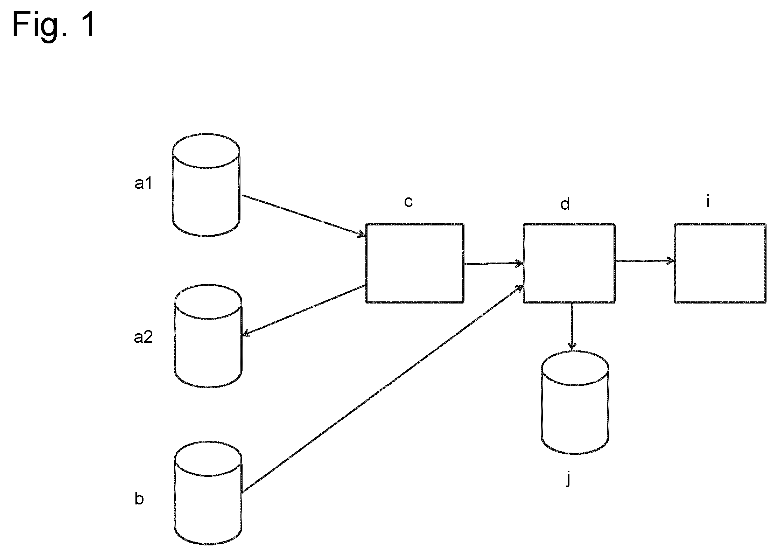

In Fig. 1 ist eine bevorzugte Ausführungsform der Anordnung schematisch für die Unterwasserfahrt dargestellt. Als Energiequelle a1 wird die energiereiche Form eines flüssigen organischen Wasserstoffträgers LOHC gewählt. In einem chemischen Reaktor c wird Wasserstoff aus der energiereichen Form chemisch exotherm abgespalten. Der in c erzeugte Wasserstoff wird mit Sauerstoff aus dem Vorratsbehälter b in der Brennstoffzelle d in Gleichstrom exotherm gewandelt.

Beispielhaft sei hier auf die Hydrierung / Dehydrierung von N-Ethylcarbazol (NEC) als Substrat eines flüssigen organischen Wasserstoffträgers hingewiesen. Dabei wird N-Ethylcarbazol (NEC) als Edukt zur Perhydro-Form (H12-NEC) gemäß dem folgenden Reaktionsschema umgesetzt:

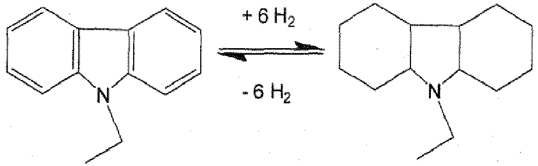

Die energiereiche Form (beispielsweise H12-NEC) und die energiearme Form (beispielsweise NEC) werden gemeinschaftlich LOHC (Flüssiger Organischer Wasserstoffträger) genannt. Die Speicherdichte für Wasserstoff ist dieser Reaktion volumenmäßig etwa doppelt so hoch wie in einem mit Wasserstoff gefüllten 700-bar-Tank. Nimmt man als Unterwasserschiff ein U-Boot als Beispiel, so ist für die Baureihe U212A die Energieversorgung von 9 PEM-Brennstoffzellen mit zusammen 306 kW sicherzustellen. Die Dichte von H12-NEC lässt sich durch Zusätze vergrößern, um das Aufschwimmen vollständig zu vermeiden.

Die Verwendung der Wärme für die Beheizung des Unterwasserschiffs ist nicht gezeichnet. Das zwangsläufig gebildete Wasser wird im Vorratstank j gespeichert. Der in der Brennstoffzelle d erzeugte Gleichstrom wird für den elektrischen Schiffsantrieb i verwendet.

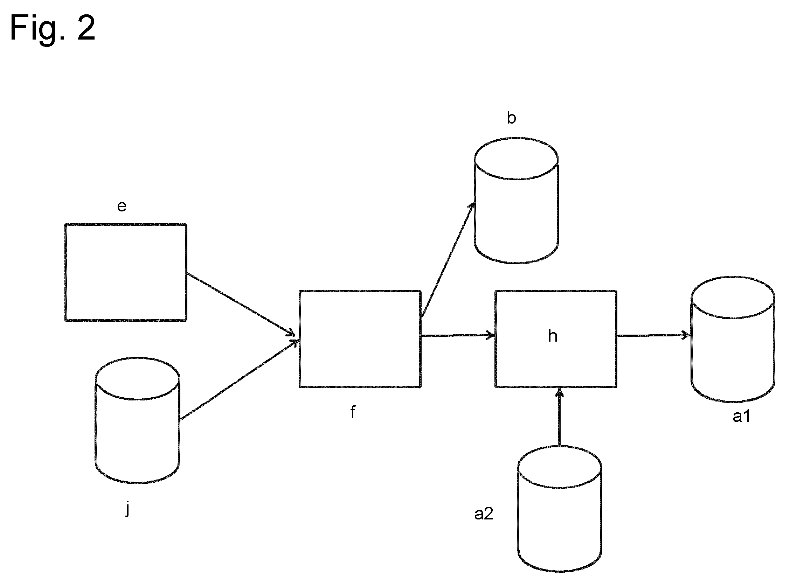

In Fig. 2 ist eine bevorzugte Ausführungsform der Anordnung schematisch für die Oberwasserfahrt dargestellt. Hier soll der Vorrat an energiereicher Form durch eine andere Energiequelle aufgefüllt werden. Als Energiequelle e dient ein Antrieb mit fossilen Brennstoffen oder durch Kernreaktion, die einen elektrischen Generator betreiben, der bevorzugt Gleichstrom erzeugt. Aus einem Vorratstank j wird destilliertes oder entionisiertes Wasser entnommen. Der Gleichstrom aus der Energiequelle e und das Wasser aus dem Vorratstank j werden in einem Elektrolyseur f zu Wasserstoff und Sauerstoff umgesetzt. Der Sauerstoff wird in den Vorratstank b geleitet, während der erzeugte Wasserstoff sofort ohne Zwischenspeicherung zur vollständigen oder teilweisen Hydrierung der energiearmen Form des LOHC benutzt wird.

Die Anordnung für die Unterwasserfahrt eines Unterwasserfahrzeugs besteht aus:
(a) mindestens zwei Tanks für einen flüssigen organischen Wasserstoffträger LOHC, nämlich einem für die hydrierte (energiereiche) Form a1 und einem anderen für die dehydrierte (energiearme) Form a2. In einer besonderen Ausführungsform ist durch eine bewegliche Wand für die Trennung der beiden Formen des flüssigen organischen Wasserstoffträgers LOHC nur ein Tank notwendig. Die Menge an flüssigem Wasserstoffträger LOHC bleibt während des Be- oder Entladungsvorgangs praktisch gleich - es wird nur der Wasserstoff aus der energiereichen Form benötigt. In einer besonderen Ausführungsform wird die Dichte der energiereichen und energiearmen Form durch einen mischbaren Stoff über den Wert 1 g/ml gehoben. Dieser Stoff muss selbst eine Dichte größer als 1 g/ml haben.
(b) mindestens einem Vorratsbehälter an Sauerstoff zum Betrieb der Brennstoffzelle. In einer besonderen Ausführungsform einer luftbetriebenen Brennstoffzelle ist auch ein Luftreservoir möglich.
(c) mindestens einem chemischen Reaktor, der mittels eines Katalysators und erhöhter Temperatur aus der energiereichen Form den Wasserstoff zumindest teilweise für die Brennstoffzelle freisetzt und das entladene oder teilentladene Substrat in den Tank zurückführt.
(d) aus mindestens einer Brennstoffzelle, die mit dem Sauerstoff aus b und dem Wasserstoff aus dem chemischen Reaktor c betrieben wird und das gebildete Wasser zur weiteren Verwendung im Unterwasserschiff bzw. in einer besonderen Ausführungsform in den Vorratstank j abgibt.
(i) aus einem elektrischen Schiffsantrieb.
   In einer Anordnung kann während der Oberwasserfahrt des Unterwasserfahrzeugs durch die Nutzung fossiler Treibstoffe auch der Vorratstank an flüssigem organischem Wasserstoffträger LOHC geladen werden. Diese Anordnung besteht aus
(e) mindestens einem mit fossilen Treibstoffen oder Kernkraft betriebenen Antrieb, der einen Generator dreht, der elektrischen Strom erzeugt.
(j) einem Vorratsbehälter aus destilliertem oder entionisiertem Wasser (f) mindestens einer Elektrolysezelle, die den in e erzeugten Strom durch Elektrolyse in Sauerstoff und Wasserstoff zerlegt.
(g) einer Rückführung des in dem Vorratsbehälter f erzeugten Sauerstoffs in den Vorratsbehälter b.
(h) mindestens einem chemischen Reaktor, der die Hydrierung von mindestens einem Substrat mit einem ausgedehnten π-konjugierten System aus dem Tank a2 unter Verwendung des in dem Elektrolyseur f' gebildeten Wasserstoffs durchführt und die energiereiche Form im Tank a1 speichert.

Die beladene Form des flüssigen organischen Wasserstoffträgers LOHC, zum Beispiel H12-NEC, kann beispielsweise in einem Hafen oder per Tankschiff als dieselähnliche Flüssigkeit getankt werden, indem NEC gegen H12NEC ausgetauscht wird.

Es werden somit folgende Funktionselemente für den Betrieb von Unterwasserschiffen gekoppelt bzw. kombiniert: eine Speicherung des Wasserstoffs drucklos in einer schwer entflammbaren Flüssigkeit, nämlich der energiereichen Form des flüssigen organischen Wasserstoffträgers; hohe Raten der Be- und Entladung des flüssigen organischen Wasserstoffträgers LOHC; ein hoher Wirkungsgrad der Be- und Entladung; eine Brennstoffzelle zur Verstromung des Wasserstoffes; eine hohe Energiedichte im Speicher und eine externe Versorgung an flüssigem organischem Wasserstoffträger LOHC im Hafen oder durch Tankschiffe.

Die vorliegende Anordnung ermöglicht somit die langandauernde Unterwasserfahrt auf Basis der derzeitig üblichen Infrastruktur, beispielsweise unter Verwendung eines Dieseltanks. Der Vorteil der vorliegenden Anordnung und des im Weiteren beschriebenen Verfahrens besteht darin, dass der kostbare Raum in einem Schiff oder Unterwasserschiff durch einen drucklosen Tank bei hoher Energiedichte optimal genutzt wird.

Dieser Tank kann jede gewünschte Form annehmen. Ein weiterer Vorteil besteht darin, dass der für die Energieerzeugung wesentliche Faktor des Wasserstoffs im Gegensatz zu vielen bisher bekannten Verfahren und Modellen nicht in großen Mengen vorhanden sein muss, sondern in einer chemischen Substanz sicher und drucklos in einer vorhandenen Infrastruktur zeitlich unlimitiert gespeichert werden kann.

Ein weiterer Vorteil ist die Möglichkeit, in einem Hafen oder an einem Tankschiff die energiearme Form der flüssigen Wasserstoffträgers abzupumpen und durch die energiereiche Form zu ersetzen. Damit wird eine schnelle Verfügbarkeit wie bei den heutigen Tankvorgängen mit Diesel erreicht.

In einer bevorzugten Ausführungsform sind die Vorratstanks für den flüssigen organischen Wasserstoffträge LOHC und den Sauerstoff mit der mindestens einen Brennstoffzelle über den chemischen Reaktor verbunden. Somit bilden die einzelnen Komponenten bzw. Bestandteile der vorliegenden Anordnung ein in sich verbundenes System zur Energiebereitstellung. Die einzelnen Zellen und Reaktoren der vorliegenden Anordnung sind mit geeigneten Verbindungsleitungen zur Überführung von Wasserstoff sowie der energiearmen bzw. energiereichen Form des flüssigen organischen Wasserstoffträgers LOHC verbunden.

Die Leitungen für den Wasserstofftransport sind bevorzugt aus gasdichten und druckfesten Materialien hergestellt. In einer bevorzugten Ausführungsform ist ein Generator für Elektrizität mit anderer Energiequelle über eine Elektrolysezelle und einen weiteren chemischen Reaktor mit den Tanks für die energiearme und energiereiche Form verbunden. Somit bilden die einzelnen Komponenten bzw. Bestandteile der vorliegenden Anordnung ein in sich verbundenes System zur Energiespeicherung und ermöglichen das Nachtanken bei Oberwasserfahrt.

Es ist bevorzugt, dass das mindestens ein energiearmes Substrat des flüssigen organischen Wasserstoffträgers LOHC mit einem ausgedehnten π-konjugierten System ausgewählt ist aus einer Gruppe enthaltend polycyclische aromatische Kohlenwasserstoffe, polycyclische heteroaromatische Kohlenwasserstoffe, π-konjugierte organische Polymere oder eine Kombination davon.

In einer Ausführungsform ist das mindestens eine energiearme Substrat mit einem ausgedehnten π-konjugierten System ausgewählt aus einer Gruppe enthaltend kondensierte heteroaromatische Kohlenwasserstoffe mit N, S oder O als Heteroatom, wobei die Heteroatome substituiert oder unsubstituiert vorliegen. Dabei sind die kondensierten heteroaromatischen Kohlenwasserstoffe bevorzugter Weise Ringsysteme mit C₆ bis C₃₀, bevorzugt C₈ bis C₂₀, insbesondere C₁₂.

In einer weiteren bevorzugten Ausführungsform sind die Heteroatome der kondensierten Kohlenwasserstoffe mit mindestens einer Alkylgruppe, mindestens einer Arylgruppe, mindestens einer Alkenylgruppe, mindestens einer Alkinylgruppe, mindestens einer Cycloalkylgruppe und/oder mindestens einer Cycloalkenylgruppe substituiert, wobei Substitutionen der Heteroatome mit C₁-C₃₀-Alkyl, bevorzugt C₁-C₁₀-Alkyl, insbesondere mit C2-C5-Alkyl vorteilhaft sind und weitere Heteroatome enthalten sein können.

In einer besonders bevorzugten Ausführungsform wird als energiearmes Substrat geeignet zur Speicherung von Wasserstoff N-Ethylcarbazol, N-n-Propylcarbazol oder N-iso-Propylcarbazol verwendet.

Der Begriff "substituiert" in Verwendung mit Alkyl, Alkenyl, Aryl, etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl.

Die substituierten Alkygruppen, Arylgruppen, oder Alkenylgruppen können einmal oder mehrfach substituiert sein und bevorzugt ein- oder zweimal, mit denselben oder unterschiedlichen Substituenten.

Der Begriff "Alkinyl", wie hier verwendet, bezeichnet einen Rest der Formel R-C=C-, insbesondere ein C₂-C₆-Alkinyl. Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

Der Begriff "Cycloalkenyl" umfasst die Gruppen Cyclopentenyl, Cyclohexenyl, Cycloheptenyl und Cyclooctenyl.

Es ist von Vorteil, wenn das energiearme Substrat mit einem ausgedehnten π-konjugierten System in dem chemischen Reaktor h bei einer Temperatur zwischen 50 und 180°C, bevorzugt 80 und 150°C und einem Druck zwischen 2 und 200 bar, bevorzugt 10 bis 100 bar in Gegenwart eines geeigneten Edelmetallkatalysators zumindest teilweise hydriert wird.

Besonders geeignete Katalysatoren für die Hydrierung des energiearmen Substrats enthalten das Element Ruthenium.

Es ist von Vorteil, wenn das energiereiche Substrat in dem chemischen Reaktor c bei einer Temperatur zwischen 120 und 250°C und bei Normaldruck in Gegenwart eines geeigneten Katalysators zumindest teilweise dehydriert wird. Besonders geeignete Katalysatoren für die Dehydrierung enthalten das Element Platin.

In einer weiteren Ausführungsform wird als Brennstoffzelle eine Niedertemperatur-Polymer-Elektrolytmembran-Brennstoffzelle (PEM) verwendet. Diese Brennstoffzellen können nicht nur in ihrer eigentlichen Funktion zur Wasserstoffoxidation verwendet werden, sondern können in umgekehrter Funktion ebenfalls als Elektrolyseur betrieben werden, wobei das für die Elektrolyse benötigte Wasser aus dem Reservoirj bezogen wird.

Es ist ebenfalls von Vorteil, wenn bei dem mindestens einen Elektrolyseur f mindestens ein wasserspeicherndes Medium j angeordnet ist. Der bevorzugt zum Einsatz kommende Speichertank für die Zwischenspeicherung der energiereichen und ggf. energiearmen Form des verwendeten Kohlenwasserstoffs weist die Konfiguration und Aufbau von üblicherweise zum Einsatz kommenden konventionellen Dieseltanks auf.

Die vorliegende Anordnung ermöglicht die Bereitstellung elektrischer Energie in getaucht fahrenden Unterwasserschiffen mit den folgenden Schritten einer Nutzung eines Vorrates an energiereichem Substrat zur Herstellung von Wasserstoff und betreiben einer Brennstoffzelle zur Bereitstellung elektrischer Energie für den elektrischen Schiffsantrieb.

Die vorliegende Anordnung ermöglicht die Aufladung des Vorrates an energiereichem Substrat in aufgetaucht fahrenden Unterwasserschiffen unter Verwendung der obigen Anordnung mit den folgenden Schritten eines Bereitstellen eines elektrischen Stroms, bevorzugt eines Gleichstroms, aus mindestens einem fossilen Antrieb oder durch Kernkraft, eines Herstellens von Wasserstoff aus Wasser in mindestens einem Elektrolyseur unter Verwendung des elektrischen Stroms, eines Überführens des gebildeten Wasserstoffes aus dem mindestens einen Elektrolyseur in einen chemischen Reaktor h enthaltend mindestens ein Substrat mit einem ausgedehnten π-konjugierten System und mindestens teilweise Hydrierung des Substrates, eines Überführens des zumindest teilweise hydrierten Substrates aus dem chemischen Reaktor h in mindestens einen Speichertank.

Es erfolgt also ein vollständiges Recycling der verwendeten flüssigen organischen Wasserstoffträgers LOHC. Da das verwendete Substrat nicht verbraucht wird, können sehr lange Gebrauchszeiten bzw. eine große Anzahl von Recycling-Zyklen (Unterwasserfahrt/Überwasserfahrt) angestrebt werden.

In einer Ausführungsform des vorliegenden Verfahrens wird der in dem Elektrolyseur f erzeugte Wasserstoff ohne Zwischenspeicherung zur zumindest teilweisen Hydrierung des mindestens einen Substrates mit einem ausgedehnten π-konjugierten System im chemischen Reaktor h verwendet. Der zumindest teilweise zu hydrierende Kohlenwasserstoff liegt im chemischen Reaktor h bevorzugt in flüssiger Form vor.

Es wäre jedoch auch denkbar, Kohlenwasserstoffe in festem Aggregatzustand zu verwenden. Des Weiteren ist es von Vorteil, wenn die bei der zumindest teilweisen Hydrierung des mindestens einen Substrates mit einem ausgedehnten π-konjugierten System im chemischen Reaktor h entstehende Wärme in ein Heizsystem des Unterwasserschiffs eingeschleust wird.

Auch ist es von Vorteil, wenn das in der Brennstoffzelle während der Wasserstoffoxidation gebildete Wasser in den Elektrolyseur überführt wird. Es ist ebenfalls vorstellbar, dass das in der Brennstoffzelle gebildete Wasser lediglich teilweise recycelt wird. Die in der Brennstoffzelle c freigesetzte Wärme wird bevorzugt in das Heizsystem des Unterwasserschiffes eingeleitet. Der für die Wasserstoffoxidation in der Brennstoffzelle benötigte Sauerstoff wird aus einem Tank b betrieben, der den im Elektrolyseur f während der Wasserhydrolyse gebildeten Sauerstoff unmittelbar in die Brennstoffzelle einleitet. Somit ist das Unterwasserschiff weitestgehend frei von einer externen Sauerstoffversorgung.

Diese Hydrierung wird im chemischen Reaktor h unter Verwendung der energiearmen Form aus Tank a2 durchgeführt. Eine Vollhydrierung ist möglich aber nicht notwendig. Das energiereiche Substrat wird im Vorratstank a1 gespeichert und steht für eine Unterwasserfahrt zur Verfügung. In einer Variante dieser bevorzugten Ausführungsform wird der Vorratstank a1 an Land oder durch ein Tankschiff befüllt und die aliquote Menge aus dem Tank a2 zum Land oder ins Tankschiff Übernommen, um die Massenverhältnisse zu erhalten.

Die Grundlage eines Ausführungsbeispiels bildet die Bauform der U-Bootreihe U212A, die mit einer PEM-Brennstoffzellenanordnung mit einer Gesamtleistung von 306 kW elektrisch ausgerüstet ist. Der Wirkungsgrad soll 65% sein, die der Brennstoffzelle zugeführte Energie ist somit 471 kW thermisch. Die Versorgung soll mit dem flüssigen organischen Wasserstoffträge H12-NEC/NEC betrieben werden. Die Dichte beider Stoffe wird zur Rechenvereinfachung zu 1 g/mL angenommen, was mit ausreichender Genauigkeit den wirklichen Verhältnissen entspricht.

Theoretisch sind in einem kg/Liter H12-NEC 58 g Wasserstoff gespeichert, nutzbar sind jedoch nur 52 g, damit ist in einem Liter H12-NEC 1,9 kWh thermische Energie gespeichert, um die Leistung von 471 kW zu erreichen, müssen also pro Stunde 471/1,9 =248 kg/Liter H12-NEC umgesetzt werden. Soll das Unterwasserschiff mit maximaler Leistung 24h unter Wasser fahren, ist ein Vorratsspeicher an energiereicher Form von 5952 Litern gleich 5952 kg notwendig.

Die Grundlage eines Gegenbeispiels ist die gleiche wie im Ausführungsbeispiel, jedoch soll ein Metallhydridspeicher TiNi-Ti2Ni mit einer Speicherdichte von 1 kWh/Liter Volumen genutzt werden, was etwa 2 kg entspricht. Um die thermische Leistung von 471 kW abzubilden, muss ein Volumen von 471 Litern bereitstehen. Für eine 24h-Fahrt ist somit das Volumen von 11.304 Litern oder 22.608 kg bereitzuhalten. Gewichtsbezogen muss also fast viermal mehr Gewicht bereitgehalten werden. Selbst eine Optimierung des Metallhydridspeichers um den Faktor 2 macht das System weniger effizient als die vorliegende Erfindung.

### Die vorliegende Erfindung betrifft weiter:

Eine erste Anordnung zum elektrischen Antrieb von Unterwasserschiffen bei Unterwasserfahrt umfassend mindestens eine Energiequelle "a1" in Form der energiereichen Form eines LOHC; mindestens einem Vorratstank für Sauerstoff oder Luft "b"; mindestens einem chemischen Reaktor "c" zur Erzeugung von Wasserstoff aus einem Substrat mit einem ausgedehnten π-konjugierten System; mindestens einer Brennstoffzelle "d", die Gleichstrom und Wasser erzeugt; mindestens einem elektrischen Antrieb "i", der den Gleichstrom in Vorwärtsbewegung umsetzt.

Eine zweite Anordnung zum Aufladen des Vorrats an energiereichem Substrat für Unterwasserschiffe bei Überwasserfahrt umfassend mindestens eine Energiequelle "e", die entweder ein mit fossilen Treibstoffen angetriebener Antrieb oder ein Antrieb aus Kernenergie ist, und einem damit betriebenen Generator für Gleichstrom mindestens einem Vorratstank "j" für destilliertes oder entionisiertes Wasser; mindestens einem Elektrolyseur, der das Wasser aus "j" mit dem Gleichstrom aus "e" in Wasserstoff und Sauerstoff umsetzt; mindestens einem Vorratstank für Sauerstoff "b" mindestens einem chemischen Reaktor "h" zur Erzeugung einer energiereichen Formeines Substrats mit einem ausgedehnten π-konjugierten System durch chemische Reaktion mittels Wasserstoff; mindestens 1 Speicher "a1" für die im Reaktor "h" erzeugte energiereiche Form

Eine dritte Anordnung mit den Merkmalen der ersten Anordnung, bei der der mindestens eine Vorratstank an energiereicher Form "a1" mit mindestens einem chemischen Reaktor "c" und mindestens einer Brennstoffzelle "d" genutzt werden, um den elektrischen Schiffsantrieb "i" zu betreiben.

Eine vierte Anordnung mit den Merkmalen der zweiten Anordnung, bei der die Energiequelle "e" und entionisiertes oder destilliertes Wasser aus dem Tank "i" mindestens einem Elektrolyseur "f" zugeleitet werden, dessen erzeugter Wasserstoff in einem chemischen Reaktor "h" zur vollständigen oder teilweisen Hydrierung der energiearmen Form des LOHC benutzt wird.

Eine fünfte Anordnung mit den Merkmalen der ersten bis vierten Anordnung, bei der das mindestens eine Substrat mit einem ausgedehnten π-konjugierten System ausgewählt ist aus einer Gruppe enthaltend polycyclische aromatische Kohlenwasserstoffe, polycyclische heteroaromatische Kohlenwasserstoffe, π-konjugierte organische Polymere oder einer Kombination davon.

Eine sechste Anordnung mit den Merkmalen nach einer der vorangehenden Anordnungen, bei der das mindestens eine Substrat mit einem ausgedehnten π-konjugierten System ausgewählt ist aus einer Gruppe enthaltend kondensierte heteroaromatische Kohlenwasserstoffe mit N, S oder als O Heteroatom, wobei die Heteroatome substituiert oder unsubstituiert vorliegen.

Eine siebte Anordnung mit den Merkmalen der fünften Anordnung, bei der die kondensierten heteroaromatischen Kohlenwasserstoffe Ringsysteme mit C6 bis C30, bevorzugt C8 bis C20, insbesondere C12 sind.

Eine achte Anordnung mit den Merkmalen der fünften oder sechsten Anordnung, bei der die Heteroatome mit mindestens einer Alkylgruppe, mindestens einer Arylgruppe, mindestens einer Alkenylgruppe, mindestens einer Alkinylgruppe, mindestens einer Cycloalkylgruppe und/oder mindestens einer Cycloalkylengruppe substituiert sind.

Eine neunte Anordnung mit den Merkmalen einer der fünften bis achten Anordnung, bei der die Heteroatome mit C₁-C₃₀-Alkyl, bevorzugt C₁-C₁₀-Alkyl, insbesondere mit C2-C5-Alkyl substituiert sind.

Ein Substrat oder eine zehnte Anordnung mit den Merkmalen der fünften bis neunten Anordnung, das einen Zusatzstoff enthält, der die Dichte des Substrates über 1 g/ml hebt.

Eine elfte Anordnung mit den Merkmalen der ersten bis zehnten Anordnung, bei der als Substrat mit einem ausgedehnten π-konjugierten System N-Ethylcarbazol, N-n-Propylcarbazol, N-iso-Propylcarbazol verwendet werden.

Eine zwölfte Anordnung mit den Merkmalen einer der vorhergehenden Anordnungen, bei der das Substrat mit einem ausgedehnten π-konjugierten System in dem chemischen Reaktor ("h") bei einer Temperatur zwischen 50 und 180°C und einem Druck zwischen 2 und 200 bar in Gegenwart eines geeigneten Katalysators zumindest teilweise hydriert wird.

Eine dreizehnte Anordnung mit den Merkmalen einer der vorhergehenden Anordnungen, bei der das hydrierte Substrat in dem chemischen Reaktor ("c") bei einer Temperatur zwischen 120 und 250°C und bei Normaldruck in Gegenwart eines geeigneten Katalysators zumindest teilweise dehydriert wird.

Ein erstes Verfahren zur Energieversorgung von getaucht fahrenden Unterwasserschiffen, insbesondere von U-Booten mit den Merkmalen der ersten und dritten Anordnung.

Ein zweites Verfahren zur Energiegewinnung von über Wasser fahrenden Unterwasserschiffen, insbesondere von U-Booten mit den Merkmalen der zweiten und vierten Anordnung.

Ein drittes Verfahren mit den Merkmalen des zweiten Verfahrens, das die Betankung des Unterwasserfahrzeugs von Land oder von einem Tankschiff aus mit energiereicher Form des LOHC vorsieht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Anordnung zum Aufladen eines Vorrats an Substrat für Unterwasserschiffe bei Oberwasserfahrt, mit:
- einer Energiequelle (e), die entweder ein mit fossilen Treibstoffen angetriebener Antrieb eines Unterwasserschiffes oder ein Antrieb eines Unterwasserschiffes aus Kernenergie ist, und einem damit betriebenen Generator für Gleichstrom;
- einem Vorratstank (j) für destilliertes oder entionisiertes Wasser;
- einem Vorratstank (b) für Sauerstoff oder Luft;
- einem Elektrolyseur zum Umsetzen des Wassers aus dem Vorratstank (j) mit dem Gleichstrom aus der Energiequelle (e) in Wasserstoff und Sauerstoff;
- einem chemischen Reaktor (h) zur Erzeugung einer energiereichen Form des Substrats mit einem ausgedehnten π-konjugierten System durch chemische Reaktion mittels des Wasserstoffes; und
- einem Speicher (a1) für die im Reaktor (h) erzeugte energiereiche Form des Substrats.

2. Anordnung nach Anspruch 1, **dadurch gekennzeichnet, dass** die Anordnung ausgebildet ist, den Gleichstrom und das entionisierte oder destillierte Wasser aus dem Vorratstank (j) einem Elektrolyseur (t) zuzuleiten, dessen erzeugter Wasserstoff in dem chemischen Reaktor (h) zur vollständigen oder teilweisen Hydrierung der energiearmen Form des Substrats mit dem ausgedehnten π-konjugierten System (LOHC) benutzt wird.

3. Anordnung zum elektrischen Antrieb von Unterwasserschiffen bei Unterwasserfahrt, mit:
- einem energiereichen Substrat mit einem ausgedehnten π-konjugierten System (LOHC);
- einem Vorratstank (b) für Sauerstoff oder Luft;
- einem chemischen Reaktor (c) zur Erzeugung von Wasserstoff aus dem Substrat mit dem ausgedehnten π-konjugierten System;
- einer Brennstoffzelle (d) zum Erzeugen von Gleichstrom und Wasser aus dem Wasserstoff; und
- einem elektrischen Antrieb (I) zum Umsetzen des Gleichstromes in eine Vorwärtsbewegung.

4. Anordnung nach Anspruch 3, **dadurch gekennzeichnet, dass** die Anordnung ausgebildet ist, einen Vorratstank (a1) mit dem energiereichen Substrat mit einem chemischen Reaktor (c) und einer Brennstoffzelle (d) zu nutzen, um den elektrischen Antrieb (i) zu betreiben.

5. Anordnung nach einem der Ansprüche 1 bis 4, **dadurch gekennzeichnet, dass** das Substrat mit dem ausgedehnten π-konjugierten System ausgewählt ist aus einer Gruppe enthaltend polycyclische aromatische Kohlenwasserstoffe, polycyclische heteroaromatische Kohlenwasserstoffe, π-konjugierte organische Polymere oder einer Kombination davon.

6. Anordnung nach einem der vorhergehenden Ansprüche, **dadurch gekennzeichnet, dass** das Substrat mit dem ausgedehnten π-konjugierten System ausgewählt ist aus einer Gruppe enthaltend kondensierte heteroaromatische Kohlenwasserstoffe mit N, S oder O als Heteroatom, wobei die Heteroatome substituiert oder unsubstituiert vorliegen.

7. Anordnung nach Anspruch 5 oder 6, **dadurch gekennzeichnet, dass** die heteroaromatischen Kohlenwasserstoffe Ringsysteme mit C₆ bis C₃₀, bevorzugt C₈ bis C₂₀, insbesondere C₁₂ sind.

8. Anordnung nach einem der Ansprüche 5 bis 7, **dadurch gekennzeichnet, dass** die Heteroatome mit mindestens einer Alkylgruppe, mindestens einer Arylgruppe, mindestens einer Alkenylgruppe, mindestens einer Alkinylgruppe, mindestens einer Cycloalkylgruppe und/oder mindestens einer Cycloalkylengruppe substituiert sind.

9. Anordnung nach einem der vorangehenden Ansprüche, **dadurch gekennzeichnet, dass** die Anordnung einen Zusatzstoff enthält, der die Dichte des Substrates über 1 g/ml hebt.

10. Anordnung nach einem der vorangehenden Ansprüche, **dadurch gekennzeichnet, dass** das Substrat mit dem ausgedehnten π-konjugierten System N-Ethylcarbazol, N-n-Propylcarbazol, N-iso-Propylcarbazol ist.

11. Anordnung nach einem der vorhergehenden Ansprüche, **dadurch gekennzeichnet, dass** die Anordnung ausgebildet ist, das Substrat mit dem ausgedehnten π-konjugierten System in dem chemischen Reaktor (h) bei einer Temperatur zwischen 50 und 180°C und einem Druck zwischen 2 und 200 bar in Gegenwart eines Katalysators zumindest teilweise zu hydrieren.

12. Anordnung nach einem der vorhergehenden Ansprüche, **dadurch gekennzeichnet, dass** die Anordnung ausgebildet ist, das hydrierte Substrat in dem chemischen Reaktor (c) bei einer Temperatur zwischen 120 und 250°C und bei Normaldruck in Gegenwart eines geeigneten Katalysators zumindest teilweise zu dehydrieren.

13. Verfahren zum Erzeugen und Speichern einer energiereicher Form eines Substrats mit einem ausgedehnten π-konjugierten System für den Einsatz in über Wasser fahrenden Unterwasserschiffen mit den Schritten:
- Erzeugen von Gleichstrom mit einer Energiequelle (e), die entweder ein mit fossilen Treibstoffen angetriebener Antrieb eines Unterwasserschiffes oder ein Antrieb eines Unterwasserschiffes aus Kernenergie ist, und einem damit betriebenen Generator für Gleichstrom;
- Speichern von destilliertem oder entionisiertem Wasser in einem Vorratstank (j);
- Umsetzen des Wassers aus dem Vorratstank (j) mit dem Gleichstrom aus der Energiequelle (e) in Wasserstoff und Sauerstoff in einem Elektrolyseur;
- Erzeugen einer energiereichen Form des Substrats mit einem ausgedehnten π-konjugierten System durch chemische Reaktion mittels Wasserstoff in einem chemischen Reaktor (h); und
- Speichern der im Reaktor (h) erzeugten energiereichen Form des Substrats in einem Speicher (a1).

14. Verfahren zur Energieversorgung von getaucht fahrenden Unterwasserschiffen mittels eines energiereichen Substrats mit einem ausgedehnten π-konjugierten System (LOHC), mit den Schritten:
- Erzeugen von Wasserstoff aus dem Substrat mit dem ausgedehnten π-konjugierten System in einem chemischen Reaktor (c);
- Erzeugen von Gleichstrom und Wasser in einer Brennstoffzelle (d) aus dem Wasserstoff; und
- Umsetzen des Gleichstromes in Vorwärtsbewegung in einem elektrischen Antrieb (I).

15. Verfahren nach dem Anspruch 14, das die Betankung des Unterwasserfahrzeugs von Land oder von einem Tankschiff aus mit energiereicher Form des Substrats mit dem ausgedehnten π-konjugierten System (LOHC) vorsieht.

## Claims

1. An arrangement for charging a substrate reservoir for underwater boats when traveling at the surface, comprising:
- an energy source (e), which is either a propulsion system of an underwater boat driven with fossil fuels or a nuclear-powered propulsion system of an underwater board, and a DC current generator operated therewith;
- a reservoir tank (j) for distilled or deionized water;
- a reservoir tank (b) for oxygen or air;
- an electrolyzer for conversion of the water from the reservoir tank (j) with the DC current from the energy source (e) to hydrogen and oxygen;
- a chemical reactor (h) for production of a high-energy form of the substrate having an extensive π-conjugated system by chemical reaction by means of the hydrogen; and
- a storage means (a1) for the high-energy form of the substrate produced in the reactor (h).

2. The arrangement as claimed in claim 1, wherein the arrangement is designed to feed the DC current and the deionized or distilled water from the reservoir tank (j) to the electrolyzer (t), the produced hydrogen of which is utilized in the chemical reactor (h) for complete or partial hydrogenation of the low-energy form of the substrate having the extensive π-conjugated system (LOHC).

3. An arrangement for electrical propulsion of underwater boats when traveling underwater, comprising:
- a high-energy substrate having an extensive π-conjugated system (LOHC);
- a reservoir tank (b) for oxygen or air;
- a chemical reactor (c) for production of hydrogen from the substrate having the extensive π-conjugated system;
- a fuel cell (d) for production of DC current and water from the hydrogen; and
- an electrical propulsion system (I) for conversion of the DC current to forward motion.

4. The arrangement as claimed in claim 3, wherein the arrangement is designed to utilize a reservoir tank (a1) having the high-energy substrate with the chemical reactor (c) and the fuel cell (d) in order to operate the electrical propulsion system (i).

5. The arrangement as claimed in any one of claims 1 to 4, wherein the substrate having the extensive π-conjugated system is selected from the group consisting of polycyclic aromatic hydrocarbons, polycyclic heteroaromatic hydrocarbons, π-conjugated organic polymers, and combinations thereof.

6. The arrangement as claimed in any one of preceding claims, wherein the substrate having the extensive π-conjugated system is selected from the group consisting of condensed heteroaromatic hydrocarbons having N, S, or O as heteroatom, wherein the heteroatoms are substituted or unsubstituted.

7. The arrangement as claimed in claims 5 or 6, wherein the heteroaromatic hydrocarbons are selected from heteroaromatic hydrocarbons that are ring systems having C₆ to C₃₀, preferably C₈ to C₂₀, more preferably C₁₂.

8. The arrangement as claimed in any one of claims 5 to 7, wherein the heteroatoms are substituted by at least one alkyl group, at least one aryl group, at least one alkenyl group, at least one alkynyl group, at least one cycloalkyl group, and/or at least one cycloalkylene group.

9. The arrangement as claimed in any one of the preceding claims, wherein the arrangement comprises an additive which raises the density of the substrate above 1 g/ml.

10. The arrangement as claimed in any one of the preceding claims, wherein the substrate having the extensive π-conjugated system is N-ethyl-carbazole, N-n-propylcarbazole, or N-isopropyl-carbazole.

11. The arrangement as claimed in any one of the preceding claims, wherein the arrangement is designed to at least partly hydrogenate the substrate having the extensive π-conjugated system in the chemical reactor (h) at a temperature between 50 °C and 180 °C and a pressure between 2 bar and 200 bar in the presence of a catalyst.

12. The arrangement as claimed in any one of the preceding claims, wherein the arrangement is designed to at least partly dehydrogenate the hydrogenated substrate in the chemical reactor (c) at a temperature between 120 °C and 250 °C and at standard pressure in the presence of a suitable catalyst.

13. A method of generating and storing a high-energy form of the substrate having an extensive π-conjugated system for use in underwater boats traveling at the surface, comprising the steps of:
- generating DC current with an energy source (e) which is either a propulsion system of an underwater boat driven with fossil fuels or a nuclear-powered propulsion system of an underwater boat, and a DC current generator operated therewith;
- storing distilled or deionized water in a reservoir tank (j);
- converting the water from the reservoir tank (j) with the DC current from the energy source (e) to hydrogen and oxygen in an electrolyzer;
- producing a high-energy form of the substrate having an extensive π-conjugated system by chemical reaction by means of hydrogen in a chemical reactor (h); and
- storing the high-energy form of the substrate produced in the reactor (h) in a storage means (a1).

14. A method of supplying energy in submersed underwater boats by means of a high-energy substrate having an extensive π-conjugated system (LOHC), comprising the steps of:
- producing hydrogen from the substrate having the extensive π-conjugated system in a chemical reactor (c);
- producing DC current and water in a fuel cell (d) from the hydrogen; and
- converting the DC current to forward motion in an electrical propulsion system (I).

15. The method as claimed in claim 14, which envisages the fueling of the underwater vehicle from land or from a tanker boat with high-energy form of the substrate having the extensive π-conjugated system (LOHC).

## Revendications

1. Assemblage pour charger un réservoir de substrat pour des carènes pendant la navigation en surface, comportant:
- une source d'énergie (e), qui est soit un mécanisme d'entraînement à propulsion d'une carène entraîné par des carburants fossiles soit un mécanisme d'entraînement d'une carène à énergie nucléaire et un générateur à courant continu fonctionnant par ceux-ci;
- un réservoir de stockage (j) d'eau distillée ou désionisée;
- un réservoir de stockage (b) d'oxygène ou d'air;
- un électrolyseur pour transformer l'eau du réservoir de stockage (j) à travers le courant continu de la source d'énergie (e) en hydrogène et en oxygène;
- un réacteur chimique (h) pour générer une forme du substrat riche en énergie ayant un système n-conjugué étendu par une réaction chimique à travers l'hydrogène; et
- un stockage (a1) pour la forme du substrat riche en énergie produite dans le réacteur (h).

2. Assemblage selon la revendication 1, **caractérisé en ce que** l'assemblage est réalisé pour transmettre le courant continu et l'eau distillée ou désionisée du réservoir de stockage (j) à un électrolyseur (t), l'hydrogène produit par celui-ci étant utilisé dans le réacteur chimique (h) pour l'hydrogénation totale ou partielle de la forme du substrat pauvre en énergie comportant un système Π-conjugué étendu (LOHC).

3. Assemblage pour l'entraînement électrique des carènes pendant la navigation sous-marine, comportant:
- un substrat riche en énergie ayant un système Π-conjugué étendu (LOHC);
- un réservoir de stockage (b) d'oxygène ou d'air;
- un réacteur chimique (c) pour générer de l'hydrogène du substrat ayant le système Π-conjugué étendu;
- une pile à combustible (d) pour générer du courant continu et de l'eau à partir de l'hydrogène;
- un mécanisme d'entraînement électrique (I) pour la transformation du courant continu en un mouvement en avant.

4. Assemblage selon la revendication 3, **caractérisé en ce que** l'assemblage est réalisé pour utiliser un réservoir de stockage (a1) comportant un substrat riche en énergie, un réacteur chimique (c) et une pile à combustible (d), pour faire fonctionner le mécanisme d'entraînement électrique (i).

5. Assemblage selon l'une des revendications 1 à 4, **caractérisé en ce que** le substrat ayant le système Π-conjugué étendu est choisi dans un groupe comportant des hydrocarbures aromatiques polycycliques, des hydrocarbures hétéroaromatiques polycycliques, des polymères organiques Π-conjugués, ou une combinaison de ceux-ci.

6. Assemblage selon l'une des revendications précédentes, **caractérisé en ce que** le substrat ayant le système n-conjugué étendu est choisi dans un groupe comportant des hydrocarbures hétéroaromatiques condensés ayant N; S ou O comme hétéroatome, les hétéroatomes étant substitués ou non substitués.

7. Assemblage selon la revendication 5 ou 6, **caractérisé en ce que** les hydrocarbures hétéroaromatiques sont des systèmes cycliques ayant C₆ jusqu'à C₃₀, préférablement C₈ jusqu'à C₂₀, en particulier C₁₂.

8. Assemblage selon l'une des revendications 5 à 7, **caractérisé en ce que** les hétéroatomes sont substitués par au moins un groupe alkyle, au moins un groupe aryle, au moins un groupe alcényle, au moins un groupe alkynyle, au moins un groupe cycloalkyle et/ou au moins un groupe cycloalkylène.

9. Assemblage selon l'une des revendications précédentes, **caractérisé en ce que** l'assemblage contient un additif, qui fait augmenter la densité du substrat au-dessus de 1 g/ml.

10. Assemblage selon l'une des revendications précédentes, **caractérisé en ce que** le substrat ayant le système Π-conjugué étendu est un N-éthylcarbazole, N-n-propylcarbozole ou N-isopropylcarbozole.

11. Assemblage selon l'une des revendications précédentes, **caractérisé en ce que** l'assemblage est réalisé pour hydrogéner au moins partiellement le substrat ayant le système n-conjugué étendu dans le réacteur chimique (h) à une température entre 50 et 180 °C et à une pression entre 2 et 200 bar en présence d'un catalyseur.

12. Assemblage selon l'une des revendications précédentes, **caractérisé en ce que** l'assemblage est réalisé pour déshydrogéner au moins partiellement le substrat dans le réacteur chimique (c) à une température entre 120 et 250 °C et à une pression ordinaire en présence d'un catalyseur approprié.

13. Procédé pour générer et pour stocker une forme de substrat riche en énergie ayant un système Π-conjugué étendu pour l'emploi dans des carènes qui naviguent sur l'eau, comportant les étapes consistant à:
- générer du courant continu avec une source d'énergie (e), qui est soit un mécanisme d'entraînement à propulsion d'une carène entraîné par des carburants fossiles soit un mécanisme d'entraînement d'une carène à énergie nucléaire, et un générateur à courant continu fonctionnant par ceux-ci;
- stocker de l'eau distillée ou désionisée dans un réservoir de stockage (j);
- transformer l'eau du réservoir de stockage (j) à travers le courant continu de la source d'énergie (e) en hydrogène et en oxygène dans un électrolyseur;
- générer une forme du substrat riche en énergie ayant un système Π-conjugué étendu par une réaction chimique à travers l'hydrogène dans un réacteur chimique (h); et
- stocker la forme du substrat riche en énergie produite dans le réacteur (h) dans un stockage (a1).

14. Procédé pour l'approvisionnement d'énergie des carènes navigant plongées à travers un substrat riche en énergie ayant un système Π-conjugué étendu (LOHC), comportant les étapes consistant à:
- générer de l'hydrogène du substrat ayant un système Π-conjugué étendu dans un réacteur chimique (c);
- générer du courant continu et de l'eau dans une pile à combustible (d) à partir de l'hydrogène; et
- transformer le courant continu en un mouvement en avant dans un mécanisme d'entraînement électrique (I).

15. Procédé selon la revendication 14, qui prévoit le ravitaillement en carburant de la carène depuis la terre ou depuis un pétrolier avec une forme du substrat riche en énergie.
